# EUROPEAN PATENT APPLICATION

(11) **EP 1 033 232 A2**
(43) Date of publication of application: **06.09.2000**
(21) Application number: 00103606.0
(22) Date of filing: 21.02.2000
(51) Int. Cl.: B29C 71/02, B42D 15/10

(54) **Method for heat treatment of card-shaped recording medium**

(30) Priority: 22.02.1999 JP 4303999
(71) Applicant: Canon Kabushiki Kaisha, Ohta-ku Tokyo 146-0092 (JP)
(72) Inventor: Inamoto,Tadayoshi, Ohta-ku, Tokyo (JP)
(74) Representative: Pellmann, Hans-Bernd, Dipl.-Ing.

(57) **Abstract**

A method of heat treatment of a card-shaped recording medium, having at least a base member (101,201), an ink-receiving layer (102,202), and an ink-permeable outermost layer (103,203) formed on the base member to make the ink-permeable outermost layer impermeable to ink by means of a heating member (301) is conducted under the conditions that the temperature of the heating member (301) is higher than the glass transition temperature of the base member material (101,201), and the temperature at the half-depth position in the base member is not higher than the glass transition temperature thereof.

## Description

### BACKGROUND OD THE INVENTION

### Field of the Invention

The present invention relates to a method of heat treatment of a card-shaped recording medium such as credit cards, bank cards, prepaid cards, clinic cards, and membership cards.

Card-shaped recording mediums are used in various uses such as credit cards, bank cards, prepaid cards, clinic cards, and membership cards. Such a card-shaped recording medium carries information buried therein depending on its uses.

The method of information recording includes methods of recording digitized information in a magnetic layer formed on the card; and methods of printing a bar code. For the same purpose, optical cards are also used which record and reproduce information by change of reflectivity or transmissivity by volatilization of a part of the optical recording layer or deformation thereof caused by laser beam irradiation. Recently, IC cards called a chip card, a memory card, a microcomputer card, or an electronic card have come to be used which have an IC chip therein. Embossing is another useful method for information recording, in which protrusions or concaves are formed on the card face by deformation to represent characters and numbers. Two or more of the aforementioned methods can be employed combinedly on one card for information recording.

In information digitization recording, the recorded information is not directly visible, so that the information cannot readily be confirmed whether the information is actually of the card owner.

Generally, precautions and rules for use of the card and other common information are printed as a logogram, an underground pattern, or a picture by screen printing or offset printing. However, in such printing, the printing plates should be employed in the number corresponding to the number of the colors, which renders it difficult to prepare the cards in a short time, and makes the unit cost higher in production of a small number of cards.

Individual information such as the appearance and name of the card owner, and the validity term of the card are recorded in some cases on the card. For example, the photograph itself is bonded to the card, or the photograph is transferred onto the card by thermal sublimation transfer. However, direct bonding of the photograph cannot readily be conducted in a short time and is costly.

The printing by thermal sublimation transfer results in a high running cost owing to the cost of the ink ribbon. In particular, in full-color printing, ink ribbons of three colors (yellow, magenta, and cyan) at least are simultaneously consumed irrespective of printing densities uneconomically. Further, the ink ribbon, which is in a thin film structure, may be broken on setting on a printer if the operator is not accustomed to handling of the ink ribbon. The material of the surface of the printed card should be selected to be suitable for the thermal sublimation printing. Since the thermal sublimation printing is conducted by contact of the printing head with the printing surface, fine roughness of the printing surface prevents clear printing, or a foreign matter like dusts on the printing surface prevents close contact of the ink ribbon with the printing face to cause defective printing. Further, the printing has to be conducted usually with margins at the end portions of the card to prevent damage of the printing head by hooking by the edge of the card.

To solve such problems, an ink-jet printing method is under investigation for printing onto an ink-receiving layer formed on the card surface. With this method, the printing head conducts printing without contact with the card, not causing the aforementioned problems. The ink-jet recording of an on-demand type which ejects and deposits the ink onto the portion of image information only of the recording medium can be conducted at a low running cost.

Hitherto, cards are disclosed which have an ink-receiving layer laminated on a card base member and has information recorded by ink-jet recording, for example, as shown below.

Japanese Patent Application Laid-Open No. 64-43826 (Japanese Patent No. 2,515,557) discloses a card which has an ink-receiving layer laminated on a card base member and has information recorded by ink-jet recording.

Japanese Patent Publication No. 3-24906 discloses a card having an ink-receiving layer containing a cationic aluminum oxide hydrate.

Japanese Patent Application Laid-Open No. 2-276670 discloses an ink-receiving layer which contains alumina hydrate.

Japanese Patent Application Laid-Open No. 8-2090 discloses an ink-jet recording card which comprises a card-shaped recording medium having a porous alumina hydrate layer densified by heat treatment.

However, a card-shaped recording medium having only a simple ink-receiving layer can be soiled during practical use for a long term, and can be discolored during outdoor weathering. Such a type of recording medium, since it still keeps printability, can be falsified.

Japanese Patent Application Laid-Open No. 8-2090 discloses a method for solving the above problems in which an outermost layer densifiable by heat treatment is provided on the ink-jet ink-receiving layer and the outermost layer is heat-treated after the ink-jet recording.

Such a type of card-shaped recording medium, which has the base member made of a thermoplastic resin of a low glass transition temperature such as vinyl chloride resins usually used for credit cards, bank cards, prepaid cards, clinic cards, and membership cards, etc., will cause dimensional change or warpage of the base member by the heat treatment disadvantageously, since the temperature of heat treatment of the outermost layer is usually higher than the glass transition temperature of the base member material.

The aforementioned disclosures mention neither such problems nor a method of solving the problems.

### SUMMARY OF THE INVENTION

The present invention intends to solve the aforementioned problems in the prior art.

The present invention provides a method of heat-treatment of a card-shaped recording medium, having at least a base member, an ink-receiving layer, and an ink-permeable outermost layer formed on the base member to make the ink-permeable outermost layer impermeable to ink by means of a heating medium, wherein the heat treatment is conducted under the conditions that the temperature of the heating member is higher than the glass transition temperature of the base member, and the temperature at the half-depth position in the base member is not higher than the glass transition temperature thereof.

### BRIEF DESCRIPTION OF THE DRAWINGS

Fig. 1 is a schematic sectional view of a card-shaped recording medium having an ink-receiving layer and an outermost layer on one face.
Fig. 2 is a schematic sectional view of a card-shaped recording medium having an ink-receiving layer and an outermost layer on the both faces respectively.
Fig. 3 is a side view of a heating apparatus employed in the present invention.
Figs. 4A, 4B and 4C show graphs of temperature distribution in a card-shaped recording medium in the heat treatment (at the both faces) according to the method of the present invention.
Figs. 5A, 5B and 5C show graphs of temperature distribution in a card-shaped recording medium in the heat treatment (at the one face only) according to the method of the present invention.

### DETAILED DESCRIPTION OF THE PREFERRED EMBODIMENTS

Present invention is described below in detail.

The card base member employed in the present invention may be made any thermoplastic resin suitable for the use without special limitation. The material of the base member includes vinyl chloride resins vinylidene chloride resins, vinyl acetate resins, polyethylene resins, polypropylene resins, methacrylic resins, ABS resins, polycarbonate resins, and glycol-. modified polyethylene terephthalate resins; polymer blends of the above resins; and copolymers of the monomers of the above resins. The glycol-modified polyethylene terephthalate resin is preferably PETG (trade name, Eastman Kodak Co.) shown by Formula (1) below.

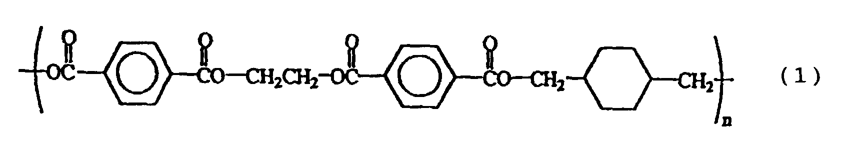

On the one face or both faces of the base member, there may be printed preliminarily a logogram, precautions for use, rules, or other common items may be printed preliminarily by screen printing, offset printing, or a like printing.

The ink-receiving layer may be provided on one face only of the base member to conduct ink-jet printing on the face, or may be provided on both of the faces. The ink-receiving layer may be formed by solidifying an ink-absorbent material, or a filler component composed of an inorganic material or an organic resin with a binder. The ink-absorbent material includes polyvinyl alcohols and modifications thereof; starch and modifications thereof; gelatin and modifications thereof; casein and modifications thereof; gum arabic; cellulose derivatives such as carboxymethylcellulose, hydroxyethylcellulose, and hydroxypropylmethylcellulose.

The inorganic filler includes silica gel, alumina, titanium oxide, calcium silicate, synthetic zeolite, and zinc oxide. The organic resin filler includes polyvinyl chloride resins, polyvinyl acetate resins, and polyethylene resins. The binder resin includes polyvinyl alcohols and modifications thereof; starch and modifications thereof; gelatin and modifications thereof; casein and modifications thereof; gum arabic; cellulose derivatives such as carboxymethylcellulose, hydroxyethylcellulose, and hydroxypropylmethylcellulose; and polyvinylpyrrolidone.

The content of the filler in the ink-receiving layer ranges preferably from 40% to 98%, more preferably from 70% to 95%. At a lower content of the filler, the ink absorbency is lower not to produce clear printing, since the printing is conducted by absorption of the ink by the interstice of the filler particles. At a higher content of the filler than the above-mentioned range, the binder resin cannot keep the filler particles in a bonded state, resulting in lower mechanical strength of the ink-receiving layer to cause cracking of the ink-receiving layer or falling-off of the filler.

The ink-receiving layer may contain, if necessary, one or more additives such as a pigment-dispersant, a thickening agent, an anti-foaming agent, a foam-inhibitor, a fluorescent whitener, a UV absorber, an antioxidant, and a mold-proofing agent.

In application of these component materials onto a base member, the binder resin component is dissolved and the filler is finely dispersed in a suitable solvent to prepare a coating liquid. Preferably these materials are dispersed in a solvent mainly composed of water.

With the coating liquid dispersion, an ink-receiving layer can be formed on the base member by coating by a conventional coating method by use of a coater such as a blade coater, an air knife coater, a roll coater, a curtain coater, a bar coater, a spray coater, and the like.

The amount of the coating ranges usually from 3 to 80 g/m², preferably from 5 to 40 g/m² as a dry solid matter. With the coating amount of 3 g/m² or less, the ink absorbency is insufficient even for single color image formation, not giving high-quality image. With the coating amount of 5 g/m² or less, the ink absorbency is insufficient for multicolor image formation, not giving high-quality image.

The ink-jet recording can be conducted usually with an ink-receiving layer ranging from about 5 to about 40 g/m² without causing a problem. In printing of an image of high printing density or of high gradation by application of a larger amount of an ink at a lower concentration, the ink-receiving layer of about 40 to 80 g/m² may be necessary. However, a still larger amount of coating is not necessary for ink reception, and is disadvantageous in cost.

The applied ink-receiving layer is dried by a hot-air dryer, an infrared dryer, or a like dryer to form an ink-receiving layer. With the base member made of a vinyl chloride resin or a like low softening point material, the drying temperature is limited to be at 50 to 70°C or lower so as not to cause deformation of the base member.

An ink-receiving layer to be hot-cured is subsequently subjected to hot cure treatment. In the case where the base member is made of a low softening point material like a vinyl chloride resin as mentioned above, the heat treatment is effectively conducted with pressing to prevent the deformation of the base member. On pressing, the pressing surface is preferably smooth, since the surface pattern of the pressing member can be transferred onto the base member or the ink-receiving layer. However, when a special surface pattern such as a pear-skin pattern is intended, the pressing member having a corresponding pattern may be used. The applied pressure ranges preferably from 1 to 15 Kg/cm², depending on the material of the base member and the material of the ink-receiving layer. At a much lower pressure, the base member and the ink-receiving layer is not sufficiently contact-bonded, whereas at a much higher pressure, the base member may flow undesirably. In the case where two or more card base member sheets are fusion-bonded, the operation is conducted in a similar manner.

In the present invention, an outermost layer is provided on the aforementioned ink-receiving layer. The outermost layer is comprised of a porous layer containing a particulate thermoplastic resin, and is fused, after printing, by heat treatment to be made nonporous and to intercept the outside air.

The particulate thermoplastic resin for the outermost layer includes particles of polyvinyl chloride, polyvinyl acetate, polyacrylic acid esters, polystyrene, polyethylene, and the like. Particles of copolymer of the corresponding monomer may be useful.

The particles of the thermoplastic resin employed in the outermost layer have an average particle diameter ranging usually from 0.1 to 3 µm, preferably from 0.2 to 2 µm, more preferably from 0.2 to 0.8 µm. With the thermoplastic resin particles of much smaller average particle diameter, the particles may penetrate into the void of the ink-receiving layer to lower the ink-absorbency or the image quality. With the thermoplastic particles of a much larger average particle diameter, the surface may not be able readily to be smoothened in nonporousness treatment after printing to lower the optical density.

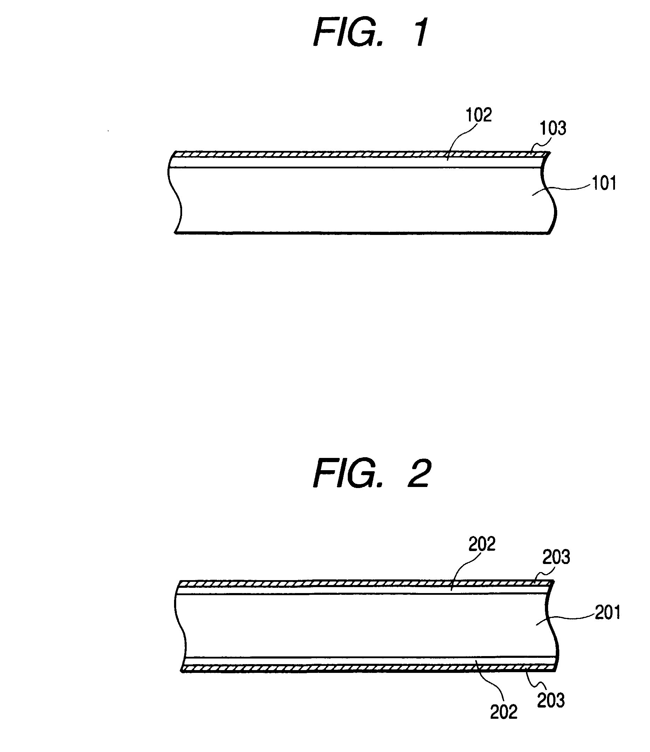

The porous layer containing thermoplastic resin particles can be formed by applying a coating liquid containing the particulate thermoplastic resin at a solid content, for example, ranging from 10% to 50% by weight as the outermost layer on the previously formed ink-receiving layer. The coating of the thermoplastic particle-containing layer should be formed in a thickness sufficient for giving surface gloss by treatment after printing, inhibiting emergence of interference light, and serving as a protection layer. The coating thickness ranges preferably from 1 to 10 µm. Fig. 1 illustrates a card-shaped recording medium having an ink-receiving layer 102 and an outermost layer 103 on one face thereof. Fig. 2 illustrates a card-shaped recording medium having an ink-receiving layer 202 and an outermost layer 203 respectively on both of the faces thereof. In the figures, numerals 101 and 201 designate the card base member, respectively.

The printing of an image is conducted by ink-jet recording in the present invention. In the ink-jet recording, any known ink-jet recording ink is useful.

The coloring matter for the ink is not specially limited, including direct dyes, acid dyes, basic dyes, reactive dyes, disperse dyes, and pigments. In the case where the weatherability of the coloring matter is important, a disperse pigment is preferably used. Generally the coloring matter is contained in the ink generally at a concentration ranging from 0.1% to 20% by weight. In the present invention, the concentration may be the same as that.

The solvent for the ink employed in the present invention may be water, a mixture of water and a water-soluble organic solvent, or a nonaqueous solvent. For higher safety and lower cost, mixtures of water and a water-soluble organic solvent are preferred which are used in ordinary printers.

The ink-jet recording by depositing the aforementioned ink onto the aforementioned card may be conducted by any ink-jet recording system which ejects ink effectively through an ink nozzle to eject the ink onto a card as an ink-deposition object. In particular the ink-jet system disclosed in Japanese Patent Application Laid-Open No. 54-59936 can be effectively employed which ejects ink through a nozzle by utilizing a force generated by abrupt ink volume change by thermal energy. In this ink-jet recording, the ink-jet ink passes through the outermost thermoplastic resin particle layer and is absorbed by the underlying ink-receiving layer to conduct ink-jet recording.

After the ink-jet recording, the outermost porous layer is made nonporous by heat treatment. This heat treatment improves the weatherability such as water-resistance, and light-fastness, giving gloss to the image, and enabling long term storage of the printed matter.

In the present invention, the heat treatment is conducted throughout the entire surface of the card-shaped recording medium by continuous contact scanning with a small contact area with a heating member having a surface temperature higher than the glass transition temperature of the base member material.

By this method, the surface of the card-shaped recording medium is heated to a temperature higher than the temperature for making nonporous the porous layer and keep the temperature in the interior of the medium lower than the glass transition temperature of the base member material, not to initiate micro-Brownian motion of the molecules in the base member material. Thereby, the outermost layer is made nonporous without causing significant warp of the base member. Further, since the heating member heats the card-shaped recording medium locally, the heating member may be smaller, thereby the heating apparatus can be made compact to lower the apparatus cost. The temperature of the heating member is preferably not higher than (Tg + 110)°C (where Tg is the glass transition temperature of the base member material).

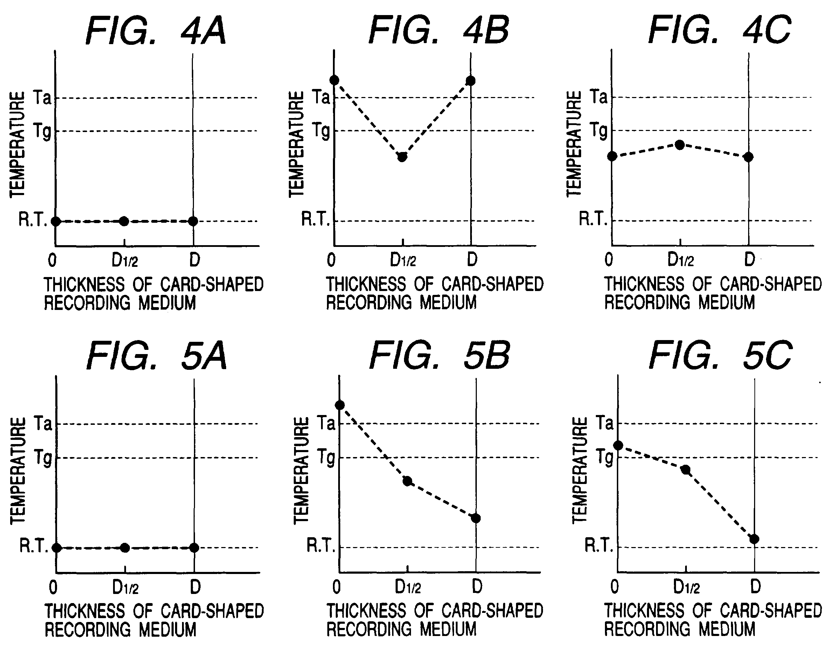

For explaining the present invention in more detail by showing the temperature change during the heat treatment, a reference sample of the card-shaped recording medium was prepared in which thermocouples were buried on the surface and in the interior of the card to measure the temperatures on the surface and in the interior. Figs. 4A through 4C and 5A through 5C show the temperatures on heating the card-shaped recording medium according to the method of the present invention.

Figs. 4A to 4C show the temperatures on heating of the both faces of the card-shaped recording medium.

Fig. 4A shows the temperatures at the surfaces and the interior (at the middle in the thickness direction or near the half-depth position) before heating. In Fig. 4A, the medium is uniformly at room temperature. In Figs. 4A to 4C, Ta indicates the minimum temperature required for making the outermost layer nonporous; Tg indicates the glass transition temperature of the base member material; the R.T. indicates room temperature; D indicates the thickness of the card-shaped recording medium; and D_{1/2} indicates the half-depth position.

Fig. 4B shows the temperatures when the surfaces of the card-shaped recording medium have reached the maximum temperature just before the heating member leaves the heated portion. The surface temperature is higher than the minimum temperature of treatment for nonporousness of the outermost layer, but the temperature at the half-depth position in the card-shaped recording medium does not exceed the glass transition temperature Tg.

Fig. 4C shows the temperatures at the time when the heating member has left and the temperature at the interior of the card-shaped recording medium has reached the maximum. Thereafter, the temperatures come down to room temperature both at the surfaces and the interior. Characteristically in the present invention, the temperature in the interior of the card-shaped recording medium is invariably below the glass transition temperature of the card base material even at the maximum temperature of the interior of the card-shaped recording medium as shown in Fig. 4C.

Figs. 5A to 5C show the temperatures on heating only at one face having an outermost layer of the card-shaped recording medium at the surfaces and the interior of the card-shaped recording medium.

Fig. 5A shows the temperatures at the surfaces and the interior (at the half-depth position) before heating. In Fig. 5A, the temperatures are all at the room temperature.

Fig. 5B shows the temperatures when the one face (at the side of the thickness 0 (zero)) only is heated, the surface of the card-shaped recording medium has reached the maximum temperature just before the heating member leaves the heated portion. The surface temperature of the heat-treated side is higher than the minimum treatment temperature for making the outermost layer nonporous, but the temperature at the half-depth position in the card-shaped recording medium does not exceed the temperature Tg.

Fig. 5C shows the temperatures at the time when the heating member has left and the temperature at the interior of the card-shaped recording medium has reached the maximum. Thereafter, the temperatures come down to room temperature both at the surfaces and in the interior. Characteristically in the present invention, the temperature in the interior of the card-shaped recording medium is invariably below the glass transition temperature of the card base material even at the maximum temperature of the interior of the card-shaped recording medium as shown in Fig. 5C.

Specifically, as an example, such heat treatment is conducted by passage of the recording medium between heated rubber rollers. Another example is a film-heating system as disclosed in Japanese Patent Application Laid-Open No. 63-313182. In this disclosed film-heating system, the heating member is in a shape of a film or a sheet, and one face of the film or sheet is allowed to slide on a heater having a linear heating element and the other face thereof is allowed to move in contact with a card-shaped recording medium. The contact time of the heating member (contact length (mm) in movement direction/delivery speed (mm/sec)) is preferably not more than 1.5 seconds.

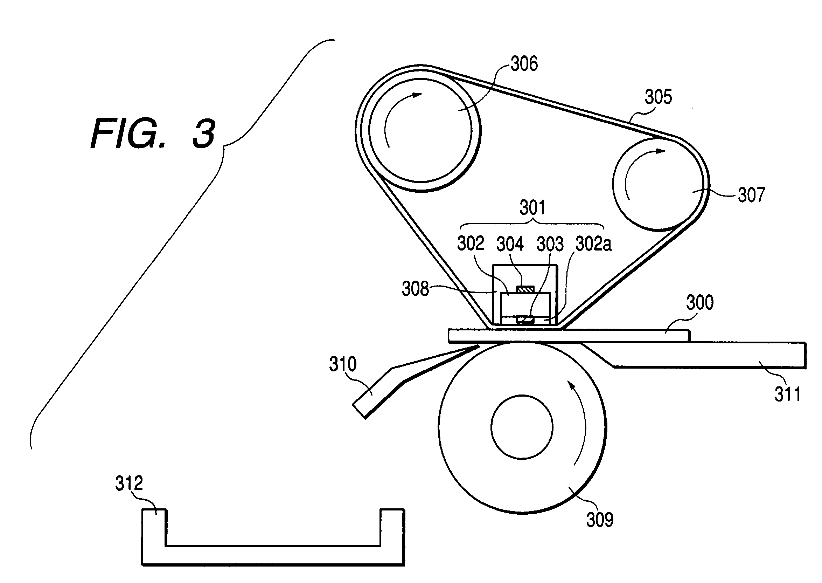

This film-heating system is explained in more detail by reference to Fig. 3. The numeral 305 indicates a film in a endless belt shape. In the present invention, this film of the heating member is brought into direct contact with a card-shaped recording medium. This film is wound and stretched around driving roller 306, driven roller 307 and straight heater 301 of low thermal capacity as the heater placed below. The numeral 310 designates a guide for taking out the card. The numeral 311 designates a guide for inserting the card.

Driven roller 307 serves also as a tension roller for the film of an endless belt shape. The film is driven to rotate at a prescribed peripheral speed in a clockwise direction with clockwise rotation of driving roller 306. Driving roller 306 is a metal roller coated with a heat-resistant material having a high frictional coefficient such as silicone rubber. Driven roller 307 is, for example, an uncoated metal roller, or the like having a surface of a frictional coefficient lower than that of driving roller 306.

Pressing roller 309 as a pressing member has releasability and rubber elasticity like silicone rubber. This pressing roller presses the driven endless film at the lower position upward against the lower face of the heater by aid of an energizing means not shown in the drawing, for example, at a contact pressure of 5 to 10 kg/cm², and is allowed to rotate counterclockwise normally in the direction of delivery of card-shaped recording medium 300. Heater 301 comprises heater base plate 302, electric heating resistance (heater) 303, temperature-sensor element 304, and the like, and is supported fixedly by heater support 308.

Heater support 308 for heater 301 has heat-insulation property, high heat resistance, and rigidity, and is constructed from a material exemplified by high heat-resistant resins such as PPS (polyphenylene sulfide), PAI (polyamideimide), PI (polyimide), and PEEK (polyether ether ketone), and liquid crystal polymers; and composite materials composed of the above resin with ceramic, metal, glass, and the like. Heater base plate 302 is a member having heat resistance, insulation properties, low heat capacity, and high thermal conductivity, such as an alumina base plate of 1 mm thick, 10 mm wide, and 80 mm long. The numeral 302a indicates a surface protection layer made of heat-resistant glass.

Heating element 303 is provided on the lower face (in opposition to the film) of heater base plate 302 along the center in the length direction, and is formed, for example, by applying an electric resistance material such as Ag/Pd (silver-palladium) and Ta₂N in a thickness of about 10 µm and width of 1 to 3 mm by screen printing or a like method, and thereon applying heat-resistant glass 302a in a thickness of about 10 µm. Thermistor 304 of low heat capacity as a temperature sensor element is bonded by a heat-conductive silicone type adhesive onto the upper face of the base plate (reverse side to the heating element) in the center portion thereof.

Heater 301 in this example generates heat over the entire length of heating element 303 by applying electric current from the both ends of the length direction of heating element 303. The power supplying mechanism is omitted in the drawing.

The portion of heating member 301 brought into contact with card-shaped recording medium 300 is preferably made of an elastic material like rubber for canceling possible small surface irregularity of the surface of card-shaped recording medium 300 to some extent to improve the contact. After the heat treatment, the card-shaped recording medium 300 is collected in tray 312.

The present invention is described specifically by reference to examples without limiting the invention in any way.

The glass transition temperature (Tg) was measured by means of a dynamic viscoelasticity tester (Rheograph Solid, trade name; Toyo Seiki Seisakusho K.K.)

### [Example 1]

A coating liquid was prepared in a manner as shown below. Alumina hydrate sol as the inorganic filler was synthesized in a hair bundle type structure (a cilium shape) by hydrolysis and peptization of aluminum isopropoxide. To 100 parts by weight of the alumina hydrate solid matter, were added 10 parts by weight of polyvinyl alcohol (PVA 117, trade name; Kuraray Co.) and 0.5 parts by weight of boric acid (H₂BO₃) to obtain a coating liquid.

This coating liquid was applied on a transparent rigid polyvinyl chloride sheet (Genotherm ZE84, trade name; Toa Kasei Co.; Tg: 74°C) of 500mm × 500mm × 0.1mm (thickness). The applied coating liquid was dried at 60°C for 20 minutes. The dried ink-receiving layer had a thickness of 33 µm.

Separately, two sheets of a white rigid vinyl chloride resin (Genotherm FZ88, trade name; Toa Kasei Co.; Tg: 78°C) were superposed. Thereon, the above polyvinyl chloride sheet having the ink-receiving layer was placed in superposition with the ink-receiving layer directed outside. On the reverse side of the superposed sheet matter, another rigid polyvinyl chloride sheet of 0.1 mm thick not coated with the ink-receiving layer was superposed.

This superposed sheet matter was treated for fusion-bonding into one sheet as below. The superposed sheet matter was held between a flat stainless steel plates kept at 150°C, and was heated and pressed at 5 Kg/cm² and for 5 minutes. The treated matter was gradually cooled to 40°C in one hour, and then taken out.

Thereon, the outermost layer was formed by application of polyvinyl chloride particles (Polyvinyl Chloride Latex G-351, trade name; Nippon Zeon Co.; film-forming temperature; 100 to 110°C) as the particulate thermoplastic resin in a dry thickness of about 3 µm by wire bar coating, and the applied layer was dried at 50°C for 15 minutes. The obtained sheet was punched out to obtain a card-shaped recording medium (see Fig. 1) in a size of 80.6mm × 54.0mm with four corners rounded at a radius of 3.0 mm.

Printing was conducted with a printer (ink-jet printer: BJC-700J, trade name; Canon K.K.) by use of an ink cartridge BC-60 and BCI-62 Photo (trade name; Canon K.K.). For printing, the card-shaped recording medium was bonded at the reverse face onto a card board, and was fed to the printer by a manual feed mode.

The printed matter was passed through a pair of heated rubber rollers for heat treatment. The rubber rollers had a diameter of 60 mm. The length of contact with the card-shaped recording medium in the delivery direction was 10 mm. Table 1 shows the effects of the heating and the feed rate.

For measurement of the maximum innermost temperature shown in Table 1, a reference sample was separately prepared which held a thermocouple sensor between the aforementioned two white rigid vinyl chloride resin sheets in the heat fusion of the above card-shaped recording medium. The maximum innermost temperature was measured under the same heat treatment temperature.

The nonporousness of the outermost layer was observed by reflection density (O.D.) at the black ink-printed area of 100% printing ratio. The nonporousness treatment was considered to be effective at the reflection density of 1.5 or higher. The untreated sample or the incompletely treated sample has the thermoplastic resin particles not completely fused in the outermost layer to contain voids, looking dull white, and having a low optical reflective power. The sample of reflection density of 1.5 or higher does not absorb the ink-jet ink, from which the nonporousness treatment was confirmed.

The warpage was evaluated by placing the card-shaped recording medium sheet on a flat table and measuring the rises of the four corners from the table face. The extent of the warpage was represented by the average of the measured rises of the four corners. The positive value of the warpage shows that the four corners rise with the ink-receiving layer directed upward, whereas the negative value shows that they rise with the ink-receiving layer directed downward. The warpage by 0.5 mm or less was hardly perceivable and caused practically no problem, and was evaluated to be "good".

The nonporousness of the outermost layer with the allowable warpage were found to be achievable under the conditions that the maximum innermost temperature of the card is kept not higher than the glass transition temperature of the base member material (78°C or lower for this base member).

The formed images were sharp, and the coloring matters did not come off by rubbing. Even after 100 hours of immersion in city water, the ink-receiving layer did not exfoliate, and impairment of the image or drop of the density was not observed. Even after storage at 40°C and at relative humidity of 90% for 50 hours, the external appearance did not change.

### [Example 2]

The same ink-receiving layer as in Example 1 was formed by applying the coating liquid on a sheet of a transparent PETG (Diafix PG-C, trade name; Mitsubishi Plastics Industries Co., Tg: 84°C) of the dimension of 330mm × 300mm × 0.1mm (thickness), and drying it at 60°C for 20 minutes. The dried ink-receiving layer had a thickness of 30 µm.

Separately, two sheets of white PETG (Diafix PG-W, trade name; Mitsubishi Plastics Industries Co., Tg: 83°C) of the same size as above and 0.28 mm thick were superposed. On each of the outside faces of this superposed sheet, the above previously prepared PETG sheet having the applied ink-receiving layer was placed in superposition with the ink-receiving layers directed outside.

This superposed sheet matter was treated for fusion bonding into one sheet as below. The superposed sheet matter was held between a flat stainless steel plates kept at 130°C, and was heated and pressed at 5 Kg/cm² for 5 minutes. The treated matter was gradually cooled to 40°C in one hour, and taken out.

Thereon, the outermost layers were formed and the resulting sheet was punched out in the same manner as in Example 1 to obtain a card-shaped recording medium (See Fig. 2).

The ink-jet recording was conducted in the same manner as in Example 1. The card after the printing was passed between a pair of heated rubber rollers of the laminator in the same manner as in Example 1 to make the outermost layer nonporous. In this Example also, the maximum innermost temperature was measured in the same manner as in Example 1 by employing a reference sample having a thermocouple sensor buried therein, prepared in the same manner as in Example 1.

Table 2 shows the results.

In this Example also, the outermost layer could be heat-treated without any substantial deformation of the card-shaped recording medium practically by keeping the innermost temperature of the base member below the glass transition temperature 83°C of the base member material.

The formed images were sharp, and the coloring matters did not come off by rubbing. Even after 100 hours of immersion in city water, the ink-receiving layer did not exfoliate, and impairment of the image or drop of the density was not observed. Even after storage at 40°C and at relative humidity of 90% for 50 hours, the external appearance did not change.

### [Example 3]

The experiment was conducted in the same manner as in Example 2 except that the PETG sheet for the fusion bonding was replaced by white sheets (Sunloidpip PET (heat-resistance grade), trade name; Tsutsunaka Plastic K.K., Tg: 106°C) of 0.28 mm thick and the fusion bonding temperature was changed to 160°C.

Table 3 shows the results.

In this Example also, the outermost layer could be heat-treated without any substantial deformation of the card-shaped recording medium practically by keeping the innermost temperature of the base member below the glass transition temperature 106°C of the base member material.

The formed images were sharp, and the coloring matters did not come off by rubbing. Even after 100 hours of immersion in city water, the ink-receiving layer did not exfoliate, and impairment of the image or drop of the density was not observed. Even after storage at 40°C and at relative humidity of 90% for 50 hours, the external appearance did not change.

### [Example 4]

The card-shaped recording medium prepared in Example 1 before the heat treatment was subjected to heat treatment with a film-heating type heating apparatus shown in Fig. 3. The temperature of the heat-resistant film was 140°C at the portion in contact with the card-shaped recording medium. The contact length in feed direction was 10 mm, and the feed speed was controlled to be at 20, 30, or 40 mm/sec.

In any of the above treatment, the outermost layer was made nonporous and the warpage was hardly noticeable.

### [Comparative Example 1]

The ink-jet printing was conducted on the same card-shaped recording medium in the same manner as in Example 1. This printed matter was heat-treated by covering the entire face of the card with an aluminum plate of the size of 150mm × 150mm having the surface coated with silicone rubber and being equipped with a heater. The surface temperature of the heating member was changed from 110 to 160°C, and the contact time was changed from 0.2 to 1.0 second.

One-face heating, and both-face heating were tried. However, all cards having treated for nonporousness were deformed and warped disadvantageously owing to the maximum innermost temperature of the card exceeding the glass transition temperature (78°C).

According to the present invention as described above, a card-shaped recording medium can readily be prepared for printing sharply personal information by ink-jet printing. The apparatus for this purpose can readily be designed since the margin for the heat treatment condition is broad. The apparatus can be designed compactly advantageously.

**Table 1**

| RESULTS OF EXAMPLE 1 | | | | | | | | | |
|---|---|---|---|---|---|---|---|---|---|
| Sample No. | Feed speed mm/sec | Contact time sec | Surface temp of rubber roll °C | Measurement | | | Evaluation | | |
| | | | | Reflection density O.D. | Warpage mm | Maximum innermost temp °C | O.D. | Warpage | Overall |
| 1-1 | 13 | 0.79 | 157 | 1.88 | x | 115 | good | poor | poor |
| 1-2 | 18 | 0.56 | 157 | 1.74 | -3.27 | 95 | good | poor | poor |
| 1-3 | 27 | 0.36 | 157 | 1.66 | 1.02 | 85 | good | poor | poor |
| 1-4 | 34 | 0.29 | 157 | 1.68 | 0.15 | 75 | good | good | good |
| 1-5 | 41 | 0.24 | 157 | 1.71 | -0.15 | 73 | good | good | good |
| 1-6 | 54 | 0.18 | 157 | 1.70 | -0.30 | 68 | good | good | good |
| 1-7 | 13 | 0.79 | 142 | 1.93 | x | 105 | good | poor | poor |
| 1-8 | 18 | 0.56 | 142 | 1.68 | -2.07 | 87 | good | poor | poor |
| 1-9 | 23 | 0.44 | 142 | 1.68 | 0.50 | 77 | good | good | good |
| 1-10 | 27 | 0.36 | 142 | 1.67 | 0.00 | 70 | good | good | good |
| 1-11 | 41 | 0.24 | 142 | 1.72 | -0.28 | 68 | good | good | good |
| 1-12 | 54 | 0.18 | 142 | 1.61 | -0.33 | 65 | good | good | good |
| 1-13 | 13 | 0.79 | 129 | 1.73 | x | 98 | good | poor | poor |
| 1-14 | 18 | 0.56 | 129 | 1.71 | -0.49 | 78 | good | good | good |
| 1-15 | 27 | 0.36 | 129 | 1.67 | -0.28 | 70 | good | good | good |
| 1-16 | 41 | 0.24 | 129 | 1.68 | -0.22 | 68 | good | good | good |
| 1-17 | 54 | 0.18 | 129 | 1.62 | -0.24 | 66 | good | good | good |
| 1-18 | 13 | 0.79 | 120 | 1.61 | -1.85 | 88 | good | poor | poor |
| 1-19 | 18 | 0.56 | 120 | 1.64 | 0.02 | 71 | good | good | good |
| 1-20 | 27 | 0.36 | 120 | 1.55 | -0.04 | 65 | good | good | good |
| 1-21 | 13 | 0.79 | 111 | 1.64 | -0.35 | 75 | good | good | good |
| Contact time = Contact length(mm)/Feed speed (mm/sec) Symbol "x" for warpage shows that the card-shaped recording medium softened and twined around the roller, rendering the measurement impossible. Evaluation: O.D.: 1.5 or more, good; less than 1.5, poor Warpage: 0.5 or less, good; more than 0.5, poor | | | | | | | | | |

**Table 2**

| RESULTS OF EXAMPLE 2 | | | | | | | | | |
|---|---|---|---|---|---|---|---|---|---|
| Sample No. | Feed speed mm/sec | Contact time sec | Surface temp of rubber roll °C | Measurement | | | Evaluation | | |
| | | | | Reflection density O.D. | Warpage mm | Maximum innermost temp °C | O.D. | Warpage | overall |
| 2-1 | 18 | 0.56 | 157 | 1.74 | -2.50 | 95 | good | poor | poor |
| 2-2 | 27 | 0.36 | 157 | 1.66 | 0.39 | 82 | good | good | good |
| 2-3 | 41 | 0.24 | 157 | 1.71 | -0.15 | 71 | good | good | good |
| 2-4 | 54 | 0.18 | 157 | 1.70 | 0.13 | 68 | good | good | good |
| 2-5 | 13 | 0.79 | 142 | 1.75 | -3.20 | 100 | good | poor | poor |
| 2-6 | 18 | 0.56 | 142 | 1.68 | -1.32 | 88 | good | poor | poor |
| 2-7 | 23 | 0.44 | 142 | 1.68 | 0.23 | 75 | good | good | good |
| 2-8 | 27 | 0.36 | 142 | 1.67 | 0.00 | 69 | good | good | good |
| 2-9 | 13 | 0.79 | 129 | 1.73 | -2.80 | 98 | good | poor | poor |
| 2-10 | 18 | 0.56 | 129 | 1.69 | 0.36 | 76 | good | good | good |
| 2-11 | 27 | 0.36 | 129 | 1.67 | 0.21 | 70 | good | good | good |
| 2-12 | 13 | 0.79 | 120 | 1.61 | -0.90 | 85 | good | poor | poor |
| 2-13 | 18 | 0.56 | 120 | 1.64 | 0.16 | 70 | good | good | good |
| 2-14 | 27 | 0.36 | 120 | 1.55 | -0.03 | 65 | good | good | good |
| 2-15 | 13 | 0.79 | 111 | 1.63 | 0.25 | 73 | good | good | good |

**Table 3**

| RESULTS OF EXAMPLE 3 | | | | | | | | | |
|---|---|---|---|---|---|---|---|---|---|
| Sample No. | Feed speed mm/sec | Contact time sec | Surface temp of rubber roll °C | Measurement | | | Evaluation | | |
| | | | | Reflection density O.D. | Warpage mm | Maximum innermost temp °C | O.D. | Warpage | Overall |
| 3-1 | 11 | 0.91 | 157 | 1.78 | -3.67 | 120 | good | poor | poor |
| 3-2 | 13 | 0.77 | 157 | 1.65 | -2.80 | 110 | good | poor | poor |
| 3-3 | 18 | 0.56 | 157 | 1.66 | 0.38 | 93 | good | good | good |
| 3-4 | 27 | 0.37 | 157 | 1.68 | 0.25 | 81 | good | good | good |
| 3-5 | 54 | 0.19 | 157 | 1.66 | -0.13 | 65 | good | good | good |
| 3-6 | 11 | 0.91 | 142 | 1.70 | -0.82 | 108 | good | poor | poor |
| 3-7 | 13 | 0.77 | 142 | 1.68 | 0.45 | 98 | good | good | good |
| 3-8 | 18 | 0.56 | 142 | 1.65 | 0.26 | 87 | good | good | good |
| 3-9 | 11 | 0.91 | 129 | 1.69 | 0.35 | 96 | good | good | good |
| 3-10 | 13 | 0.77 | 129 | 1.64 | 0.22 | 91 | good | good | good |
| 3-11 | 18 | 0.56 | 129 | 1.62 | 0.16 | 77 | good | good | good |
| 3-12 | 11 | 0.91 | 120 | 1.68 | -0.22 | 85 | good | good | good |
| 3-13 | 13 | 0.77 | 120 | 1.62 | -0.23 | 82 | good | good | good |
| 3-14 | 18 | 0.56 | 120 | 1.61 | -0.13 | 68 | good | good | good |
| 3-15 | 27 | 0.37 | 120 | 1.63 | 0.02 | 63 | good | good | good |
| 3-16 | 11 | 0.91 | 111 | 1.63 | 0.12 | 75 | good | good | good |
| 3-17 | 13 | 0.77 | 111 | 1.64 | 0.08 | 71 | good | good | good |

A method of heat treatment of a card-shaped recording medium, having at least a base member, an ink-receiving layer, and an ink-permeable outermost layer formed on the base member to make the ink-permeable outermost layer impermeable to ink by means of a heating member is conducted under the conditions that the temperature of the heating member is higher than the glass transition temperature of the base member material, and the temperature at the half-depth position in the base member is not higher than the glass transition temperature thereof.

## Claims

1. A method of heat treatment of a card-shaped recording medium, having at least a base member, an ink-receiving layer, and an ink-permeable outermost layer formed on the base member to make the ink-permeable outermost layer impermeable to ink by means of a heating member, wherein the heat treatment is conducted under the conditions that the temperature of the heating member is higher than the glass transition temperature of the base member material, and the temperature at the half-depth position in the base member is not higher than the glass transition temperature thereof.

2. The method of heat treatment according to claim 1, wherein the heat treatment is conducted by bringing the heating member into contact locally with a portion of the card-shaped recording medium, and scanning continuously the card-shaped recording medium with the heating member.

3. The method of heat treatment according to claim 1 or 2, wherein the heating member is comprised of opposing rollers, and the heat treatment is conducted with the heating member by feeding the card-shaped recording medium at a constant linear speed through the heating member to press and heat-treating the card-shaped recording medium.

4. The method of heat treatment according to claim 1 or 2, wherein the heating member is in a shape of a film or sheet, a heater having a linear heating element slides on one face of the film or sheet, and the other face moves in contact with the card-shaped recording medium.

5. The method of heat treatment according to any of claims 1 to 4, wherein the face of the heating member is made of an elastic material.

6. The method of heat treatment according to claim 1, wherein a material of the base member is selected from vinyl chloride resins, vinylidene chloride resins, vinyl acetate resins, polyethylene resins, polypropylene resins, methacrylic resins, ABS resins, polycarbonate resins, glycol-modified polyethylene terephthalate resins, polymer blends thereof, and copolymers of the corresponding monomers.

7. The method of heat treatment according to claim 1, wherein a material of the outermost layer is composed of fine particles of a thermoplastic resin.
